# EUROPEAN PATENT APPLICATION

(11) **EP 4 737 183 A1**
(43) Date of publication of application: **06.05.2026**
(21) Application number: 25212392.2
(22) Date of filing: 30.10.2025
(51) Int. Cl.: B60K 35/81, B60W 50/00

(54) **SYSTEM AND METHOD FOR MOBILE DEVICE CONTROL OF VEHICLE CABIN COMFORT FEATURES**

(30) Priority: 04.11.2024 US 202418936295
(71) Applicant: Harman International Industries, Inc., Stamford, Connecticut 06901 (US)
(72) Inventor: HAYASHI, Naoki, Dexter, MI, 48130 (US); GINGERICH, Devin Allen, Walled Lake, MI, 48390 (US)
(74) Representative: Kraus & Lederer PartGmbB

(57) **Abstract**

In at least one embodiment, a system for controlling comfort features in a vehicle is provided. The system includes a memory device and at least one first controller. The at least one first controller is programmed to receive a first signal indicative of a location of the vehicle and to receive a second signal indicative of a weather pattern experienced by the vehicle over an elapsed period of time. The at least one first controller is further programmed to provide one or more selections fields on a display for selection thereof based on the first signal and the second signal, the one or more selection fields corresponding to recommended comfort features to be one or activated or deactivated in the vehicle and to transmit a command to the vehicle to one of activate or deactivate the recommended comfort features in the vehicle.

## Description

### TECHNICAL FIELD

Aspects disclosed herein generally related to a system and method for mobile device control of vehicle cabin comfort features. These features and others will be described in more detail below.

### BACKGROUND

There are multiple automaker specific applications (i.e., apps) for various vehicles that support the functionality of remotely turning on a cabin climate control setting. However, current applications turn on or activate a main heating, ventilation, and air conditioning (HVAC) system for heating/cooling and do not provide the owner with the ability to control other features such as the heated steering wheel and heated seats. Such temperature control features utilize a significant amount of energy. This aspect may be especially impactful on electric vehicles (EVs) in extremely cold environments. Some applications may allow control over windshield heating. However, such applications may not have the ability to know whether or not it's necessary to heat the windshield since there may not be a connection or referencing capability to external weather conditions. Additionally, the limited comfort features that are able to be controlled via an app do not incorporate predictive behaviors based on calendar and location data. Therefore, it is not possible to send push notifications to a user to provide suggestions for turning comfort features on.

### SUMMARY

In at least one embodiment, a system for controlling comfort features in a vehicle is provided. The system includes a memory device and at least one first controller. The at least one first controller is programmed to receive a first signal indicative of a location of the vehicle and to receive a second signal indicative of a weather pattern for the vehicle over an elapsed period of time. The at least one first controller is further programmed to provide one or more selections fields on a display for selection thereof based on the first signal and the second signal, the one or more selection fields corresponding to recommended comfort features to be one of activated or deactivated in the vehicle and to transmit a command to the vehicle to one of activate or deactivate the recommended comfort features in the vehicle.

In at least another embodiment, a method for controlling comfort features in a vehicle is provided. The method includes receiving a first signal indicative of a location of the vehicle and receiving a second signal indicative of a weather pattern experienced by the vehicle over an elapsed period of time. The method further includes providing one or more selections fields on a display for selection thereof based on the first signal and the second signal, the one or more selection fields corresponding to recommended comfort features to be one or activated or deactivated in the vehicle and transmitting a command to the vehicle to one of activate or deactivate the recommended comfort features in the vehicle in response to a selection of the one or more selection fields on the display.

In at least another embodiment, a computer-program product embodied in a non-transitory computer read-able medium that is programmed and executable by one or more controllers to control comfort features in a vehicle is provided. The computer-program product comprises instructions for receiving a first signal indicative of a location of the vehicle and for receiving a second signal indicative of a weather pattern experienced by the vehicle over an elapsed period of time. The computer-program product further comprises providing one or more selections fields on a display for selection thereof based on the first signal and the second signal, the one or more selection fields corresponding to recommended comfort features to be one of activated or deactivated in the vehicle and transmitting a command to the vehicle to one of activate or deactivate the recommended comfort features in the vehicle in response to a selection of the one or more selection fields on the display.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
FIGURE 1 generally depicts a vehicle system in accordance with one embodiment;
FIGURE 2 generally depicts a primary application interface associated with a mobile device in accordance with one embodiment;
FIGURE 3 generally depicts a cold weather preparation user interface associated with the mobile device in accordance with one embodiment;
FIGURE 4 generally depicts a warm/hot weather preparation user interface associated with the mobile device in accordance with one embodiment;
FIGURE 5 generally depicts a recommended cabin preparation user interface associated with the mobile device in accordance with one embodiment;
FIGURE 6 generally depicts a saved lists user interface associated with the mobile device in accordance with one embodiment; and
FIGURE 7 generally depicts a method for executing aspects of the vehicle system in accordance with one embodiment.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

The present disclosure provides, among other things, a mobile device that includes an application ("app") which provides an owner, driver, or passenger of a connected vehicle the ability to turn on a plurality of comfort features inside of the vehicle. For example, on-demand control that may be based off of "smart" predictions (e.g., predictive behavior/information - such as commute times, calendar events, and local weather, etc.), which is especially useful during extreme hot or cold climates. In a main application feature page as provided as an interface on the mobile device, the user is able to select from, for example, four options such as hot, cold, recommended, and saved lists. Within each page, various comfort features are listed such as, for example, heated steering wheel, climate control, front/rear seat heating/cooling, and ALL ON. Specific lists can be favorited on the mobile device (e.g., specific lists may be selected by the user for ease of access in the future). The app can provide a recommended list of comfort features to turn on based on the outside environment (e.g., snow, frozen rain, extreme heat, etc.) by referencing past and current weather data available that is available to the mobile device for a local area. The app may also integrate into the user's calendar events and location data when given permission to provide push notifications to turn on features based on aforementioned predictive behavior.

By being able to turn on specific cabin comfort functions via a mobile device, the user (e.g., driver and/or passenger) can create a comfortable driving experience in extreme temperatures without relying solely on the main HVAC system within the vehicle. For example, rather than turning the cabin temperature to 72F for an extended period of time in the winter season, the user can specify a temperature of 65F and turn on heated seats and heated steering wheel to increase the perceived warmth. Additionally, with a "Suggested Cabin Preparation" option (or interface on the mobile device), the mobile device may reference live and past weather data/trends to determine climate control feature is most appropriate for the situation. For example, if it has been snowing for the past few hours, all window/sideview mirror and internal features may be turned on. However, if the weather is cold, the mobile device may not suggest any defrost functions. Additionally, by the vehicle pushing notifications that are sent to a user's phone for reminders to turn on features based on anticipated trips, the disclosed mobile device provides another level of convenience and comfort that is not currently found in other apps.

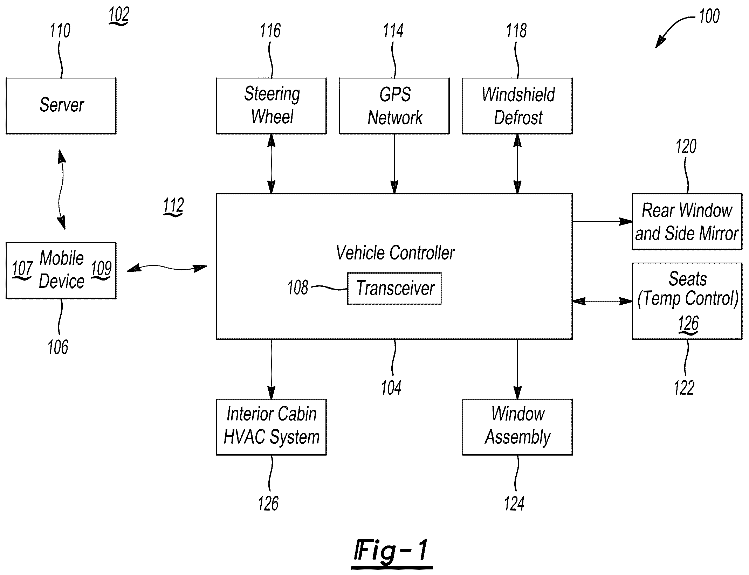

FIGURE 1 generally depicts a system 100 for use in a vehicle 102 in accordance with one embodiment. The vehicle 102 may include an automobile, a crossover utility vehicle (CUV), a sport utility vehicle (SUV), a truck, a recreational vehicle (RV), boat, plane, or other mobile machine for transporting people or goods. In many cases, the vehicle 102 may be powered by an engine. As another possibility, the vehicle 102 may be a battery electric vehicle (BEV), a hybrid electric vehicle (HEV) powered by both an internal combustion engine and one or move electric motors, such as a series hybrid electric vehicle (SHEV), a plug-in hybrid electric vehicle (PHEV), a parallel/series hybrid vehicle (PSHEV), or a fuel-cell electric vehicle (FCEV). It should be noted that the illustrated system 100 is merely an example, and more, fewer, and/or differently located elements may be used.

The system 100 generally includes at least one vehicle controller 104 ("controller 104") that may be operably coupled to any number of vehicle systems/devices. A mobile device 106 may be operably coupled to the controller 104. The mobile device 106 also includes at least one controller 107 (or the first controller 107) and a memory device 109 positioned therein. The first controller 107 may execute code stored on the memory device 109 to execute any number of features noted herein. The mobile device 106 may transmit any number of control signals to the controller 104 to control various aspects of the vehicle system/devices. The mobile device 106 may belong to a driver or passenger of the vehicle 102. The controller 104 includes a transceiver 108 to enable bi-directional communication between the vehicle 102 and the mobile device 106. The mobile device 128 may be any of type of a portable computing device, such as a cellular phone, a tablet computer, a wearable device, a smart watch, a smart fob, a laptop computer, a portable music player, or other device capable of engaging in wireless or wired communication with the system 100. The wireless transceiver 108 may be configured to support a variety of wireless communication protocols including but not limited to Wi-Fi, Bluetooth, radio-frequency identification (RFID), near-field communication (NFC), and communicate with a compatible wireless transceiver (not shown) of the mobile device 106 to enable various functions. One or more servers 110 (the server 110) may be operably coupled to the vehicle 102 via the controller 104. For example, the transceiver 108 of the controller 104 may be coupled to the server 110 through a cloud network 112.

A global positioning network system 114 (or global navigation satellite system (GNSS) controller 114) may be coupled to the vehicle controller 104. The GNSS controller 114 is configured to communicate with multiple satellites and determine the location of the vehicle 102. The relevance of the location of the vehicle 102 will be discussed in more detail below. The controller 104 is operably coupled to a steering wheel assembly 116. The vehicle controller 104 is generally configured to control a steering wheel of the assembly 116 to perform a heating operation. The controller 104 is operably coupled to a windshield assembly 118. The vehicle controller 104 may also control a defrost operation for a windshield of the windshield assembly 118. Similarly, the controller 104 may be operably coupled to a rear window and side mirror assembly 120 to also control a defrost operation for a rear window and/or side mirror(s) of the assembly 120.

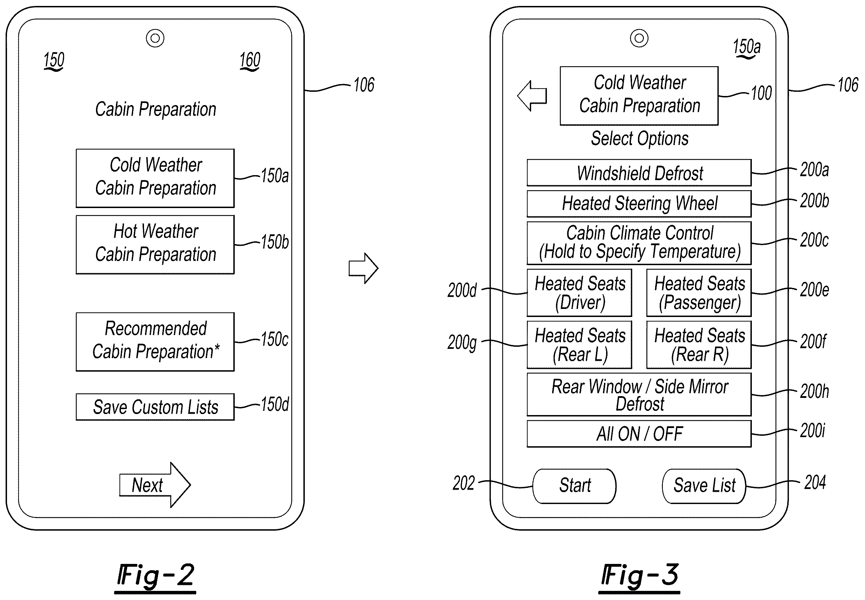

The controller 104 is also coupled to one or more seats in the system 100. In general, each seat 122 may include one or more heating/cooling controller 126 to activate/deactivate heating and cooling operations for the various seats 122 positioned in the vehicle 102. Similarly, the controller 104 may also control the seats to reach desired temperatures as set forth by the driver or passenger in the vehicle 102. In addition, the controller 104 is operably coupled to a window assembly 124 to control movement of the window (e.g., open or close). The controller 104 is operably coupled to a heating, ventilation, and air condition (HVAC) system 126. The HVAC system 126 generally provide heating/cooling operations to adjust the temperature of an interior cabin within the vehicle 102. As noted above, the mobile device 106 may transmit controls signal to the controller 104 to control various operations related to but not limited to the steering wheel assembly 116, the windshield assembly 118, the rear window and side mirror assembly 120, the seats 122, the window assembly 124, and the HVAC system 126. These aspects and other will be discussed in more detail in connection with FIGUREs 2 - 6.

FIGURE 2 generally depicts a primary application interface 150 associated with the mobile device 106 in accordance with one embodiment. In general, the primary application interface 150 offers the user (e.g., driver or passenger) the ability to select various selection fields 150a - 150d on a display 160 of the mobile device 106. The selection field 150a generally corresponds to a cold weather cabin preparation selection field that may be selected by the driver and/or passenger of the vehicle 102. In this regard, the user may select various cooling options to prepare condition the cabin of the vehicle 102 from a temperature perspective. In response to the cold weather cabin preparation selection field 150a being selected by the user, the mobile device 106 may offer additional aspects that may be selected to cool the cabin of the vehicle as will be discussed in more detail in connection with FIGURE 3.

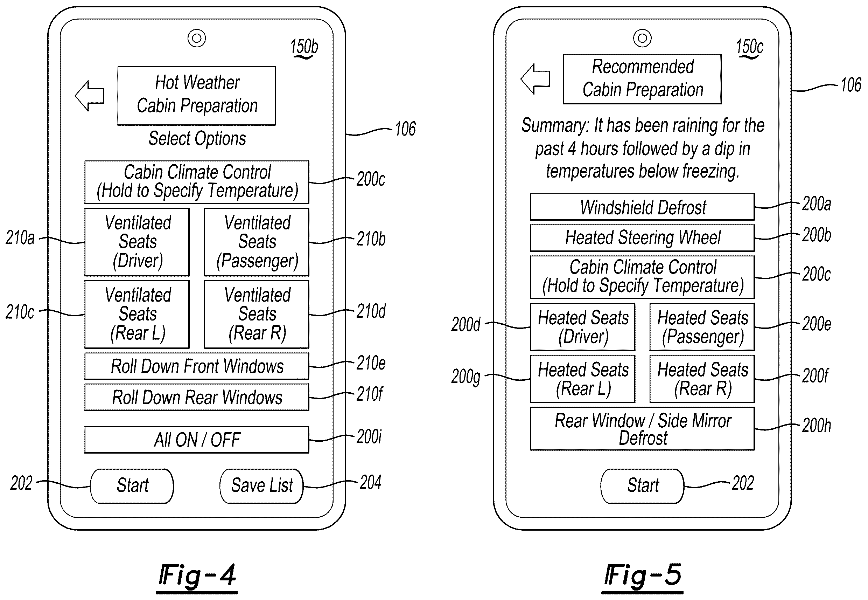

The selection field 150b generally corresponds to a warm weather cabin preparation selection field that may be selected by the driver and/or passenger of the vehicle 102 to condition the cabin of the vehicle 102 from a temperature perspective. In this regard, the user may select various heating options to prepare condition a cabin of the vehicle 102. In response to the hot weather cabin preparation selection field 150b being selected by the user, the mobile device 106 may offer additional aspects that may be selected to heat the cabin of the vehicle 102 as will be discussed in more detail in connection with FIGURE 4.

The field 150c generally corresponds to a recommended cabin preparation selection field that may be selected by the driver and/or passenger of the vehicle 102. The recommended cabin preparation selection field 150c provides recommended options provided by the vehicle 102 (or the controller 104) and/or the mobile device 106 that are based on local weather conditions over a prior predetermined amount of time (e.g., past 8 to 12 hours). This aspect will be discussed in more detail in connection with FIGURE 5. The field 150d generally corresponds to a saved customs list field that may be selected by the driver and/or passenger of the vehicle 102. The saved customs list selection field 150d generally corresponds to saved presets for various temperature control settings for a particular driver or passenger for any one or more of the steering wheel assembly 116, the windshield assembly 118, the rear window and side mirror assembly 120, the seats 122, the window assembly 124, and the HVAC system 126.

FIGURE 3 generally depicts a more detailed view of the cold weather cabin preparation selection field 150a associated with the mobile device 106 in accordance with one embodiment. The selection field 150a includes a plurality of selection options 200a - 200f. The various plurality of selection options 200a - 200i corresponds to selections for one or more of the following systems: the steering wheel assembly 116, the windshield assembly 118, the rear window and side mirror assembly 120, the seats 122, and the window assembly 124. For example, the selection option 200a corresponds to a windshield selection option in which the user may select, via the mobile device 106 to activate or deactivate a defrost operation for the windshield of the assembly 118. The selection option 200b corresponds to heated steering wheel option in which the user may select, via the mobile device 106, to activate of deactivate a heating operation for the steering wheel of the assembly 116.

The selection option 200c corresponds to a cabin climate control selection option in which the driver and/or occupant can select or specify a particular temperature for the HVAC system 126 to set for the interior cabin. The selection options 200d and 200e corresponds to a heated seat option for a driver and a heated seat option for a passenger, respectively. These options 200d and 200e enable the driver and the passenger the ability to activate/deactivate the heated seat operation, respectively, as well as set the corresponding level for the amount of heat to be applied to each seat. Similarly, selection options 200g and 200f correspond to a heated seat operation for a passenger positioned on a left side of the second row and for a passenger positioned on a right side of the second row. These options 200g and 200f enable the rear passengers the ability to activate/deactivate the heated seat operation, respectively, as well as set the corresponding level for the amount of heat to be applied to each seat.

The selection option 200h corresponds to a rear window/side mirror defrost selection option in which the driver and/or passenger can activate or deactivate a defrost operation for the rear window/side mirror. The selection option 200i corresponds to an all on/off selection in which all of the selection options 200a - 200h are activated or deactivated. The selection option 202 generally corresponds to a start command and the selection option 204 corresponds to a saved list in which the driver and/or passenger can save their respective settings as established for the selection options 200a - 200h.

FIGURE 4 generally depicts a more detailed view of the hot weather cabin preparation selection field 150b associated with the mobile device 106 in accordance with one embodiment. The selection field 150b includes the cabin climate control selection option 200c, all on/off section option 200e, the start selection option 202, the save list selection option 204 and a plurality of selection options 210a - 200f. The selection options 210a and 210b generally correspond to ventilated seat selection options for a driver and for a front row passenger, respectively. These selection options 210a and 210b enable the driver and the front row passenger to activate/deactivate the ventilated seat operation as well as set the corresponding cooling/ventilation levels for the driver and the front row passenger. The selection options 210c and 210d generally correspond to ventilated seat selection options for a driver and for a front row passenger, respectively. These selection options 210a and 210b enable the driver and the front row passenger, respectively, to activate/deactivate the ventilated seat operation as well as set the corresponding cooling/ventilation levels for the driver and the front row passenger. Similarly, selection options 210e and 210f correspond to ventilation seat selection options for a passenger positioned on a left side of the second row and for a passenger positioned on a right side of the second row, respectively. These options 200g and 200f enable the rear seat passengers the ability to activate/deactivate the ventilation seat operation, respectively, as well as set the corresponding level for the amount of ventilation to be applied to each seat.

FIGURE 5 generally depicts the recommended cabin preparation selection field 150c associated with the mobile device 106 in accordance with one embodiment. The recommended cabin selection field 150c as shown in connection with FIGURE 5 depicts various settings that have been selected by the vehicle controller 104 and/or the mobile device 106 (i.e., the first controller 107) that correspond to the selection options shown in the cold weather cabin preparation selection field 150a. In this case, the vehicle controller 104 may communicate with the mobile device 106 to highlight various selection options 200a - 200h that should be activated based on weather patterns that have been detected based on an elapsed period of time. For example, the selection field 150c may identify that it has been raining for the past 4 hours followed by a dip in temperature below the freezing mark (or freezing temperature). Conversely, the mobile device 106 (e.g., the first controller 107) may also highlight the various selection options 200a - 200h that should be activated based on weather patterns that have been detected based on an elapsed period of time. In other words, the mobile device 106 may employ a predetermined lighting scheme to highlight the various selections options 200a - 200h that should be activated based on weather patterns that have been detected based on an elapsed period of time. The vehicle controller 104 and/or the mobile device 106 may access the server 110 to receive the past weather conditions and also utilize information from the GPS controller 114 to determine the location of the vehicle 102 and to associate the captured weather information with the location of the vehicle 102. In addition, location information may be captured with respect to the location of the mobile device 106.

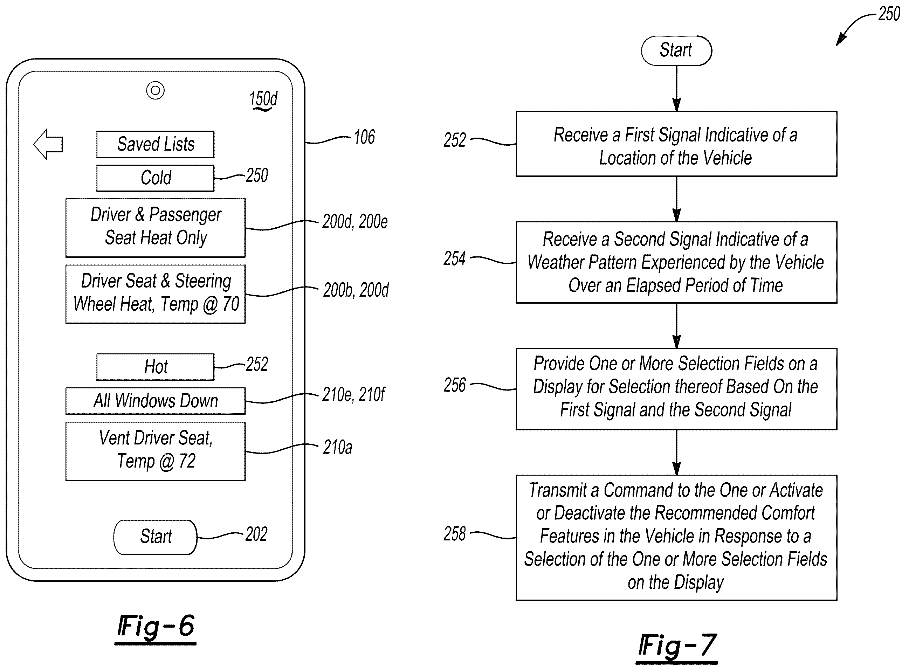

FIGURE 6 generally depicts the saved list selection field 150d associated with the mobile device 106 in accordance with one embodiment. The saved list selection field 150d includes a saved cold cabin preparation selection field 250 and a saved hot cabin preparation selection field 252. The saved cold cabin preparation selection field 250 generally includes the saved selection options (e.g., 200b, 200d, and 200e) as saved from the cold weather cabin preparation selection field 150a. Similarly, the saved hot cabin preparation selection field 252 generally includes the saved selection options (e.g., 210a, 210e, and 210f) as saved from the hot weather cabin preparation selection field 150b.

In general, the driver and/or passenger may select any of the noted selection options noted above when the vehicle 102 is in an OFF position (e.g., key is not in a start position). For example, the selection may be performed along with a remote start operation. In addition, the driver and/or passenger may select any of the noted options above when the vehicle 102 is in an accessory (ACC) Mode. The ACC mode generally corresponds to a state for the vehicle 102 when the vehicle 102 is between a fully off state and a fully on state. In this state the engine of the vehicle 102 is not on (or running). For an ICE based vehicle, some of the accessories for vehicle 102 may be turned on, such as a radio, headlights, windows, etc. In this regard, these features correspond to electrical devices that can run off of the battery of the vehicle 102. On vehicle 102 that utilize a physical key, a driver may perform a half turn of the key while in an ignition switch before fully turning the key to the ON mode to turn or start the engine. The ACC mode may be applicable to electric vehicles. However, the ACC mode generally corresponds to a more limited operating mode than when the engine is running.

FIGURE 7 generally depicts a method 250 for executing aspects of the vehicle system 100 in accordance with one embodiment.

In operation 252, the vehicle controller 104 or the first controller 107 receive a first signal indicative of a location of the vehicle 102. The location of the vehicle 102 may be provided by the GPS controller 114 or the server 110. In operation 254, the vehicle controller 104 or the first controller 107 receive a second signal indicative of a weather pattern experienced by the vehicle over an elapsed period of time. As noted above, the vehicle controller 104 and/or the first controller 1007 of the mobile device 106 may access the server 110 to receive the past weather conditions and also utilize information to determine the location of the vehicle 102 and to associate the captured weather information with the location of the vehicle 102. In addition, location information may be captured with respect to the location of the mobile device 106.

In operation 256, the first controller 107 of the mobile device 106 may provide the one or more selections fields 200a - 200h on a display thereof based on the first signal and the second signal (e.g., see FIGURE 5). Additionally or alternatively, a display (not shown) (or human machine interface (HMI)) positioned in the vehicle 102 that is operably coupled to the vehicle controller 104 may also provide the one or more selection fields 200a - 200h thereon based on the first signal and the second signal. It is recognized that the HMI positioned in the vehicle 102 may provide any number of the primary application interface 150 (e.g., see FIGURE 2), the cold weather cabin preparation selection field 150a (e.g., see FIGURE 3), the hot weather cabin preparations selection field 150b (e.g., see FIGURE 4), the recommended cabin preparation selection field 150c, and the save custom list selection field 150d.

In operation 258, the vehicle controller 104 or the first controller 107 transmits a command to the vehicle 102 to one of activate or deactivate a recommended comfort features (e.g., windshield defrost, heated steering wheel, cabin climate control temperature, heated seats, rear/side window defrost, etc.) in response to one or more of the selection fields 200a - 200h being selected.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A system for controlling comfort features in a vehicle, the system comprising:
a memory device; and
at least one first controller including the memory, the at least one first controller programmed to:
receive a first signal indicative of a location of the vehicle;
receive a second signal indicative of a weather pattern experienced by the vehicle over an elapsed period of time;
provide one or more selections fields on a display for selection thereof based on the first signal and the second signal, the one or more selection fields corresponding to recommended comfort features to be one of activated or deactivated in the vehicle; and
transmit a command to the vehicle to one of activate or deactivate the recommended comfort features in the vehicle in response to a selection of the one or more selection fields on the display.

2. The system of claim 1 further comprising a vehicle controller programmed to one of activate and deactivate the recommended comfort features in the vehicle in response to the command.

3. The system of claim 1, wherein the command corresponds to at least one of the following:
activating or deactivating one of a driver heated seat or a passenger heated seat,
activating or deactivating a rear passenger heated seat,
activating a defrost operation for one of a front window, a rear window, or a side mirror,
specifying a predetermined temperature for an interior of the vehicle,
activating a heated steering wheel operation.

4. The system of any preceding claim, wherein the at least one first controller is further programmed to associate the weather pattern experienced by the vehicle over the elapsed period of time to the location of the vehicle prior to providing the one or more selections fields on the display for selection thereof for the recommended comfort features.

5. The system of any preceding claim, wherein the at least one first controller is further programmed to employ a predetermined lighting scheme for the one or more selections fields on the display for selection thereof based on the first signal and the second signal.

6. The system of any preceding claim, wherein the at least one first controller is further programmed to provide a preselected set of selection fields for selection to cool an interior of the vehicle.

7. The system of claim 6, wherein the preselected set of selection fields includes a roll down window command and wherein the at least one first controller transmits the roll down window command to the vehicle to roll down any one or more of a front or rear door window to cool the interior of the vehicle.

8. The system of any preceding claim, wherein the at least one first controller is further programmed to provide a preselected set of selection fields for selection to heat an interior of the vehicle.

9. A method for controlling comfort features in a vehicle, the method comprising:
receiving a first signal indicative of a location of the vehicle;
receiving a second signal indicative of a weather pattern experience by the vehicle over an elapsed period of time;
providing one or more selections fields on a display for selection thereof based on the first signal and the second signal, the one or more selection fields corresponding to recommended comfort features to be one or activated or deactivated in the vehicle; and
transmitting a command to the vehicle to one of activate or deactivate the recommended comfort features in the vehicle in response to a selection of the one or more selection fields on the display.

10. The method of claim 9 further comprising associating the weather pattern for the vehicle over the elapsed period of time to the location of the vehicle prior to providing the one or more selections fields on the display for selection thereof for the recommended comfort features.

11. The method of claim 9 or 10 further comprising employing a predetermined lighting scheme for the one or more selections fields on the display for selection thereof based on the first signal and the second signal.

12. The method of any of claims 9 to 11, further comprising providing a preselected set of selection fields for selection to cool an interior of the vehicle and preferably the the preselected set of selection fields includes a roll down window command.

13. The method of claim 12 further comprising transmitting the roll down window command to the vehicle to roll down any one or more of a front or rear door window to cool the interior of the vehicle.

14. A computer-program product embodied in a non-transitory computer read-able medium that is programmed and executable by one or more controllers to control comfort features in a vehicle, the computer-program product comprising instructions for:
receiving a first signal indicative of a location of the vehicle;
receiving a second signal indicative of a weather pattern experienced by the vehicle over an elapsed period of time;
providing one or more selections fields on a display for selection thereof based on the first signal and the second signal, the one or more selection fields corresponding to recommended comfort features to be one or activated or deactivated in the vehicle; and
transmitting a command to the vehicle to one of activate or deactivate the recommended comfort features in the vehicle in response to a selection of the one or more selection fields on the display.

15. The computer-program product of claim 14 further comprising associating the weather pattern for the vehicle over the elapsed period of time to the location of the vehicle prior to providing the one or more selections fields on the display for selection thereof for the recommended comfort features.
